# EUROPEAN PATENT SPECIFICATION

(11) **EP 3 339 126 B1**
(45) Date of publication and mention of the grant of the patent: **29.04.2020**
(21) Application number: 17186659.3
(22) Date of filing: 17.08.2017
(51) Int. Cl.: B60W 40/09, B60W 50/14, G01C 21/34, G01C 21/36

(54) **METHOD AND SYSTEM TO RECOGNIZE INDIVIDUAL DRIVING PREFERENCE FOR AUTONOMOUS VEHICLES**
VERFAHREN UND SYSTEM ZUR ERKENNUNG INDIVIDUELLER ANTRIEBSPRÄFERENZ FÜR FAHRZEUGE
PROCÉDÉ ET SYSTÈME POUR RECONNAÎTRE UNE PRÉFÉRENCE DE CONDUITE INDIVIDUELLE POUR VÉHICULES AUTONOMES

(30) Priority: 20.12.2016 US 201615385716
(43) Date of publication of application: 27.06.2018
(73) Proprietor: Baidu USA LLC, Sunnyvale, California 94089 (US)
(72) Inventor: Yang, I-Hsuan, Sunnyvale, CA California 94089 (US); Li, Liyun, Sunnyvale, CA California 94089 (US); Miao, Jinghao, Sunnyvale, CA California 94089 (US); Fang, Shiyuan, Sunnyvale, CA California 94089 (US); Wang, Jingao, Sunnyvale, CA California 94089 (US)
(74) Representative: V.O.

(56) References cited:
- EP-A1- 2 813 408
- WO-A1-2016/107674
- WO-A1-2016/109540
- DE-A1-102011 012 793
- DE-A1-102014 208 311
- US-A1- 2015 149 017

## Description

### TECHNICAL FIELD

Embodiments of the present invention relate generally to operating autonomous vehicles. More particularly, embodiments of the invention relate to operating autonomous vehicles based on user profiles.

### BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, allowing the vehicle to travel with minimal human interaction or in some cases without any passengers.

Similar to human beings having a particular driving style while driving, an autonomous vehicle may personalize a driving style for the comfortability of each unique user. For example, a user may prefer certain driving style such as the action of overtaking, lane-changing timing and speed, turn trajectory, etc. Unfortunately, just one or even several fixed driving styles will not be compatible with all users. While existing vehicles may include fixed driving modes (e.g., aggressive mode/conservative mode) for selection, such does not resolve the issue as, for example, a generally aggressive/conservative driver may not be aggressive/conservative at all time. WO2016/109540A1 discloses systems and methods for controlling an autonomous vehicle. One method includes receiving, with an electronic processor of the autonomous vehicle, a profile selection. The method further includes receiving, with the electronic processor, a driver profile including a plurality of settings based on the profile selection. The method further includes, when the autonomous vehicle is operating in an autonomous driving mode, controlling, with the electronic processor, at least one vehicle control system of the autonomous vehicle based on at least one of the plurality of settings. The method further includes operating, with the electronic processor, the autonomous vehicle in a manual driving mode. The method further includes receiving, with the electronic processor, data from at least one sensor while the autonomous vehicle operates in the manual driving mode. The method further includes determining, with the electronic processor, a driving style based on the data and adjusting at least one of the plurality of settings based on the driving style. EP 2 813 408 A1 discloses a method for operating a vehicle, a vehicle guidance activity of a driver of the vehicle is monitored so that, based on the monitored vehicle guidance activity, driving parameters describing a driving style of the driver are generated and provided to a driver assistance system of the vehicle so that the driver's driving style is at least partly reproduced in the context of control of the vehicle by the driver assistance system.

### SUMMARY

The present invention provides a computer-implemented method for operating an autonomous driving vehicle, a non-transitory machine-readable medium and a data processing system, according to appended claims 1, 8 and 12 respectively.

### BRIEF DESCRIPTION OF THE DRAWINGS

Embodiments of the invention are illustrated by way of example and not limitation in the figures of the accompanying drawings in which like references indicate similar elements.
Figure 1 is a block diagram illustrating a networked system according to one embodiment of the invention.
Figure 2 is a block diagram illustrating an example of an autonomous vehicle according to one embodiment of the invention.
Figure 3 is a block diagram illustrating an example of a perception and planning system used with an autonomous vehicle according to one embodiment of the invention.
Figure 4 is a block diagram illustrating an example of a system for determining individual driving behaviors and preferences according to one embodiment of the invention.
Figure 5 is a flow diagram illustrating a process of data collection and profile generation according to one embodiment of the invention.
Figure 6 is a flow diagram illustrating a process of profile application according to one embodiment of the invention.
Figure 7 is a block diagram illustrating a data processing system according to one embodiment.

### DETAILED DESCRIPTION

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

According to some embodiments, the system emulates a human driver's driving behaviors and preferences based on collected driving statistics and/or user-specific information. For example, the system communicates with one or more sensors from an autonomous vehicle to obtain sensor data associated with the driving style of one or more users. The system further communicates with a remote server to obtain route selection and point of interest (POI) information associated with one or more users. The system also interactively communicates with one or more users of the autonomous vehicle to obtain the user-specific information (e.g., personal interests, family member information, mood, health condition, etc.). For each of the users, the driving statistics and user-specific information are communicated to a learning system to determine driving behaviors and preferences of the user. Based on the determined driving behaviors and preferences, the learning system generates a driving profile with information reflecting the determined driving behaviors and preferences.

In one embodiment, driving statistics of an autonomous vehicle are collected, with the driving statistics including driving commands issued at different points in time and route selection information of one or more routes while the autonomous vehicle was driven in a manual driving mode by one or more users. For each user of the autonomous vehicle, one or more user driving behaviors and preferences of the user are determined from at least the driving statistics for predetermined driving scenarios; and one or more driving profiles for the user are generated based on the determined user behaviors and preferences under the driving scenarios, where the driving profiles are utilized to control the autonomous vehicle under similar driving scenarios when the user is riding in the autonomous vehicle that operates in an autonomous driving mode.

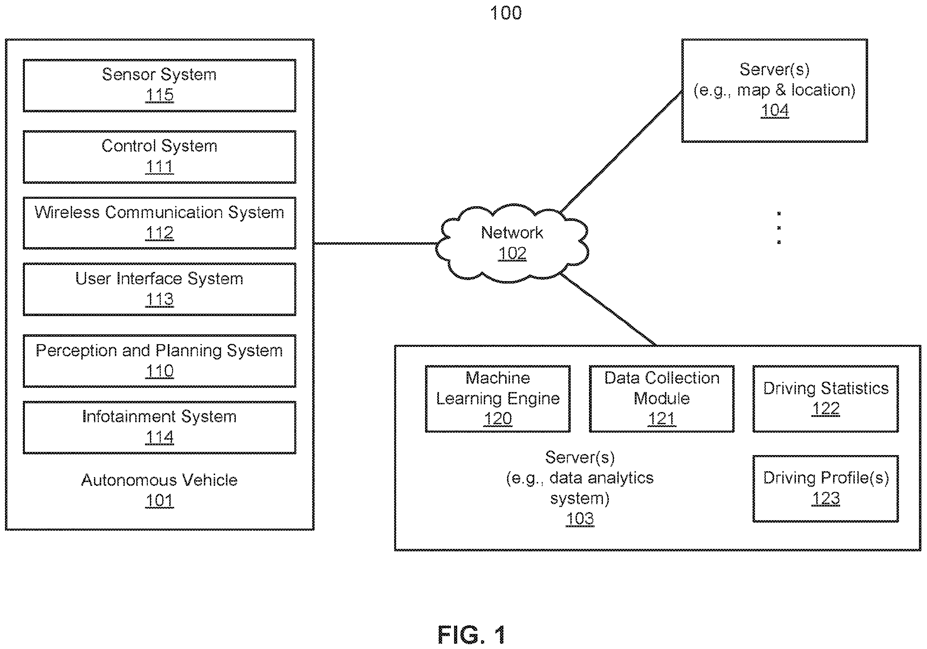

Figure 1 is a block diagram illustrating an autonomous vehicle network configuration according to one embodiment of the invention. Referring to Figure 1, network configuration 100 includes autonomous vehicle 101 that may be communicatively coupled to one or more servers 103-104 over a network 102. Although there is one autonomous vehicle shown, multiple autonomous vehicles can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) severs, or location servers, etc.

An autonomous vehicle refers to a vehicle that can be configured to in an autonomous mode in which the vehicle navigates through an environment with little or no input from a driver. Such an autonomous vehicle can include a sensor system having one or more sensors that are configured to detect information about the environment in which the vehicle operates. The vehicle and its associated controller(s) use the detected information to navigate through the environment. Autonomous vehicle 101 can operate in a manual mode, a full autonomous mode, or a partial autonomous mode.

In one embodiment, autonomous vehicle 101 includes, but is not limited to, perception and planning system 110, vehicle control system 111, wireless communication system 112, user interface system 113, infotainment system 114, and sensor system 115. Autonomous vehicle 101 may further include certain common components included in ordinary vehicles, such as, an engine, wheels, steering wheel, transmission, etc., which may be controlled by vehicle control system 111 and/or perception and planning system 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

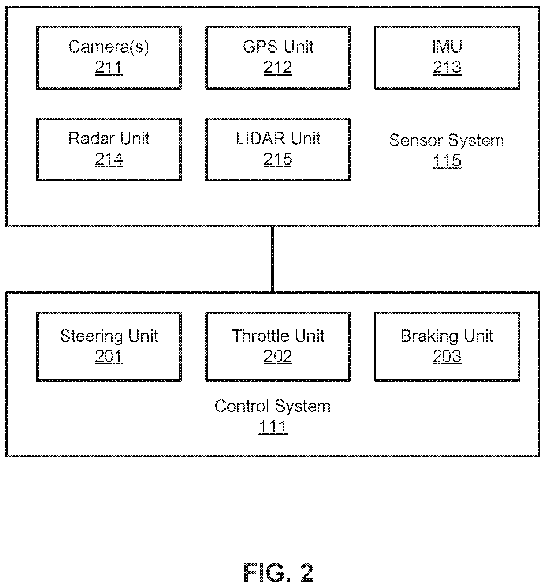

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS unit 212 may include a transceiver operable to provide information regarding the position of the autonomous vehicle. IMU 213 may sense position and orientation changes of the autonomous vehicle based on inertial acceleration. Radar unit 214 may represent a system that utilizes radio signals to sense objects within the local environment of the autonomous vehicle. In some embodiments, in addition to sensing objects, radar unit 214 may additionally sense the speed and/or heading of the objects. LIDAR unit 215 may sense objects in the environment in which the autonomous vehicle is located using lasers. LIDAR unit 215 could include one or more laser sources, a laser scanner, and one or more detectors, among other system components. Cameras 211 may include one or more devices to capture images of the environment surrounding the autonomous vehicle. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the autonomous vehicle. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn control the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between autonomous vehicle 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyboard, a touch screen display device, a microphone, and a speaker, etc.

Some or all of the functions of autonomous vehicle 101 may be controlled or managed by perception and planning system 110, especially when operating in an autonomous driving mode. Perception and planning system 110 includes the necessary hardware (e.g., processor(s), memory, storage) and software (e.g., operating system, planning and routing programs) to receive information from sensor system 115, vehicle control system 111, wireless communication system 112, and/or user interface system 113, process the received information, plan a route or path from a starting point to a destination point, and then drive vehicle 101 based on the planning and control information. Alternatively, perception and planning system 110 may be integrated with vehicle control system 111.

For example, a user as a passenger may specify a starting location and a destination of a trip, for example, via a user interface. Perception and planning system 110 obtains the trip related data. For example, perception and planning system 110 may obtain location and route information from an MPOI server, which may be a part of servers 103-104. The location server provides location services and the MPOI server provides map services and the POIs of certain locations. Alternatively, such location and MPOI information may be cached locally in a persistent storage device of perception and planning system 110.

While autonomous vehicle 101 is moving along the route, perception and planning system 110 may also obtain real-time traffic information from a traffic information system or server (TIS). Note that servers 103-104 may be operated by a third party entity. Alternatively, the functionalities of servers 103-104 may be integrated with perception and planning system 110. Based on the real-time traffic information, MPOI information, and location information, as well as real-time local environment data detected or sensed by sensor system 115 (e.g., obstacles, objects, nearby vehicles), perception and planning system 110 can plan an optimal route and drive vehicle 101, for example, via control system 111, according to the planned route to reach the specified destination safely and efficiently.

According to one embodiment, autonomous vehicle 101 may further include infotainment system 114 to provide information and entertainment to passengers of vehicle 101. The information and entertainment content may be received, compiled, and rendered based on content information stored locally and/or remotely (e.g., provided by servers 103-104). For example, the information may be streamed in real-time from any of servers 103-104 over network 102 and displayed on a display device of vehicle 101. The information may be augmented with local information captured in real-time, for example, by one or more cameras and the augmented content can then be displayed in a virtual reality manner.

According to the present invention, based on location and route information, MPOI information, and/or real-time traffic information, infotainment system 114 and/or perception and planning system 110 determines certain types of content that are suitable for the current traffic environment (e.g., MPOIs). The system performs a lookup operation in a content index (not shown) to identify a list content items (e.g., sponsored content or Ads) as content item candidates, for example, based on the real-time traveling information.

According to the present invention, the system ranks the content items in the list using a variety of ranking algorithm. The content items are ranked based on a user profile of the user. The content items are ranked based on user preferences, which are derived from the user profile. The user profile is compiled based on a history of user operations of the user in the past. According to the present invention, the system applies one or more content ranking models to each of the content items to determine a ranking score for each content item. A content item having a ranking score that is above a predetermined threshold is selected. The content ranking models may be trained using sets of known features representing similar traveling environments or traffic conditions in the past. The content ranking models may also be trained based on user profiles of similar users.

The selected content item is then rendered and displayed on a display device within the autonomous vehicle. In one embodiment, the system further augments the selected content item onto an image that is captured at the point in time using one or more cameras of the autonomous vehicle. In one embodiment, an image recognition is performed on the image and to derive or understanding the content represented by the image. For example, one or more keywords may be derived to describe the image or a POI. The list of content items may be identified further based on the one or more keywords or the POI represented by the image. The system then augments the selected content item onto the image to generate an augmented image, where the content item may be superimposed on the image. The augmented image is then displayed on a display device of the autonomous vehicle. Note that infotainment system 114 may be integrated with data processing system 110 according to some embodiments.

Alternatively, a user can specifically select from a list of precompiled content (e.g., videos, movies) from a content store or database, which may be periodically updated from a content server of a content provider over a network (e.g., cloud network). Thus, a user can specifically select the real-time actual content captured in real-time or previously rendered content to be displayed on the display device(s), for example, retrieved from data store. For example, if autonomous vehicle 101 is traveling in a snowy day in New York City, the user can switch the display devices to display a sunny environment in Hawaii as if autonomous vehicle 101 was traveling on a sunny day. The content may be displayed in multiple display devices (e.g., multiple windows) in a collaborated or coordinated manner, i.e., virtual reality manner.

According to one embodiment, as illustrated in Figure 1, the server 103 includes machine learning engine 120, data collection module 121, driving statistics 122, and one or more driving profiles 123. In some embodiments, while an autonomous vehicle (e.g., autonomous vehicle 101) is operating or driven in a manual driving mode by one or more users, the data collection module 121 may automatically collect driving information or data of the autonomous vehicle, and store the driving information onto the server 103 as driving statistics 122. The data collection module 121 for example may communicate or interface, over network 102, with a client software application installed in perception and planning system 110 for performing commands to collect and communicate the driving information, over the network 102, to the server 103.

In some embodiments, the driving statistics 122 may include driving commands (e.g., throttle, brake, steering) issued and vehicle's responses (e.g., speed, acceleration or deceleration, direction) at different points in time. The driving commands, for example, may be determined from sensor data provided by one or more sensors (e.g., steering sensor, throttle sensor, braking sensor, etc.) of sensor system 115. The driving statistics 122 may further include route selection information such as most frequently user selected routes provided, for example, by localization module 301 and/or server 104 (e.g., MPOI server). The driving statistics 122 may also include point of interest (POI) information such as visiting frequency of a specific location (e.g., home, work, personal point of interest) provided, for example, by the server 104.

The driving profile(s) 123 are utilized to control the autonomous vehicle under similar driving scenarios when a user is riding in the autonomous vehicle operating in an autonomous driving mode. In some embodiments, for each of the users of the autonomous vehicle, driving profile(s) 123 are generated or built, for example, by machine-learning engine 120, based on determined or recognized behaviors and preferences of the user and include parameters that reflect the determined behaviors and preferences of the user. The behaviors and preferences may be determined (e.g., using machine learning engine 120) from the driving statistics 122. In some embodiments, the driving profile(s) 123 may be generated while the autonomous vehicle is offline. For example, while the autonomous vehicle is disconnected with the server 103, machine learning engine 120 may continue to leverage the collected driving statistics 122 to build the driving profile(s) 123. Driving profiles of a user may then be uploaded on to a vehicle and the driving profiles can be periodically updated online based on the ongoing driving statistics obtained while the vehicle is driven by the user.

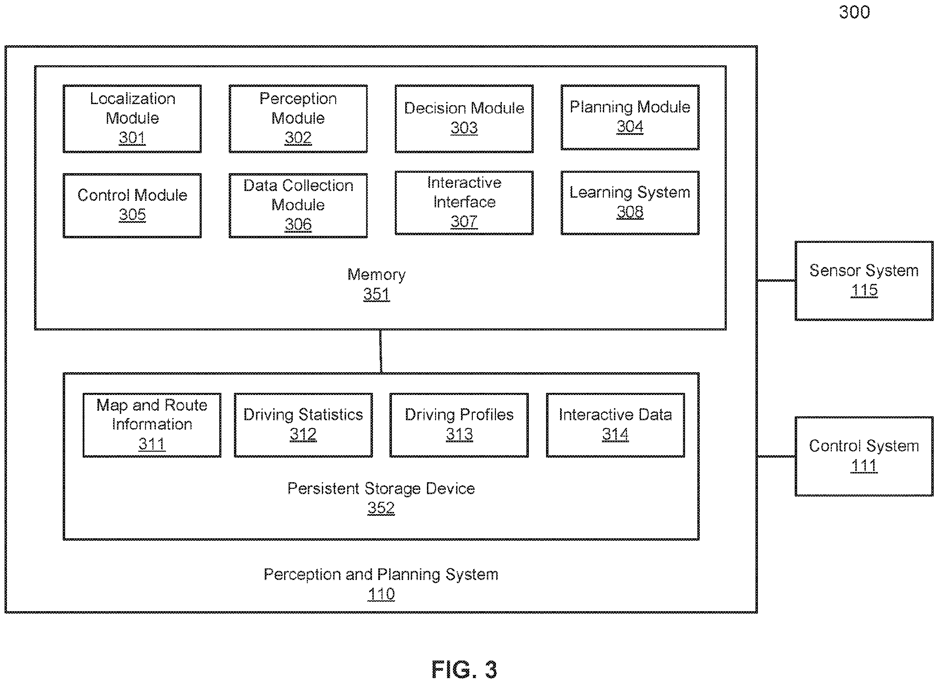

Figure 3 is a block diagram illustrating an example of a perception and planning system used with an autonomous vehicle according to one embodiment of the invention. System 300 may be implemented as a part of autonomous vehicle 101 of Figure 1 including, but is not limited to, perception and planning system 110, vehicle control system 111, and sensor system 115. Referring to Figure 3, perception and planning system 110 includes, but is not limited to, localization module 301, perception module 302, decision module 303, planning module 304, control module 305, data collection module 306, interactive interface 307, and learning system 308.

Some or all of modules 301-308 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-308 may be integrated together as an integrated module.

Localization module 301 manages any data related to a trip or route of a user. A user may log in and specify a starting location and a destination of a trip, for example, via a user interface. Localization module 301 communicates with other components of autonomous vehicle 300, such as map and route information 311, to obtain the trip related data. For example, localization module 301 may obtain location and route information from a location server and a map and POI (MPOI) server. A location server provides location services and an MPOI server provides map services and the POIs of certain locations, which may be cached as part of map and route information 311. While autonomous vehicle 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration (e.g., straight or curve lanes), traffic light signals, a relative position of another vehicle, a pedestrian, a building, crosswalk, or other traffic related signs (e.g., stop signs, yield signs), etc., for example, in a form of an object.

Perception module 302 may include a computer vision system or functionalities of a computer vision system to process and analyze images captured by one or more cameras in order to identify objects and/or features in the environment of autonomous vehicle. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR.

For each of the objects, decision module 303 makes a decision regarding how to handle the object. For example, for a particular object (e.g., another vehicle in a crossing route) as well as its metadata describing the object (e.g., a speed, direction, turning angle), decision module 303 decides how to encounter the object (e.g., overtake, yield, stop, pass). Decision module 303 may make such decisions according to a set of rules such as traffic rules, which may be stored in persistent storage device 352 (not shown).

Based on a decision for each of the objects perceived, planning module 304 plans a path or route for the autonomous vehicle, as well as driving parameters (e.g., distance, speed, and/or turning angle). That is, for a given object, decision module 303 decides what to do with the object, while planning module 304 determines how to do it. For example, for a given object, decision module 303 may decide to pass the object, while planning module 304 may determine whether to pass on the left side or right side of the object. Planning and control data is generated by planning module 304 including information describing how vehicle 300 would move in a next moving cycle (e.g., next route/path segment). For example, the planning and control data may instruct vehicle 300 to move 10 meters at a speed of 30 mile per hour (mph), then change to a right lane at the speed of 25 mph.

Based on the planning and control data, control module 305 controls and drives the autonomous vehicle, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, and turning commands) at different points in time along the path or route.

Note that decision module 303 and planning module 304 may be integrated as an integrated module. Decision module 303/planning module 304 may include a navigation system or functionalities of a navigation system to determine a driving path for the autonomous vehicle. For example, the navigation system may determine a series of speeds and directional headings to effect movement of the autonomous vehicle along a path that substantially avoids perceived obstacles while generally advancing the autonomous vehicle along a roadway-based path leading to an ultimate destination. The destination may be set according to user inputs via user interface system 113. The navigation system may update the driving path dynamically while the autonomous vehicle is in operation. The navigation system can incorporate data from a GPS system and one or more maps so as to determine the driving path for the autonomous vehicle.

Decision module 303/planning module 304 may further include a collision avoidance system or functionalities of a collision avoidance system to identify, evaluate, and avoid or otherwise negotiate potential obstacles in the environment of the autonomous vehicle. For example, the collision avoidance system may effect changes in the navigation of the autonomous vehicle by operating one or more subsystems in vehicle control system 111 to undertake swerving maneuvers, turning maneuvers, braking maneuvers, etc. The collision avoidance system may automatically determine feasible obstacle avoidance maneuvers on the basis of surrounding traffic patterns, road conditions, etc. The collision avoidance system may be configured such that a swerving maneuver is not undertaken when other sensor systems detect vehicles, construction barriers, etc. in the region adjacent the autonomous vehicle that would be swerved into. The collision avoidance system may automatically select the maneuver that is both available and maximizes safety of occupants of the autonomous vehicle. The collision avoidance system may select an avoidance maneuver predicted to cause the least amount of acceleration in a passenger cabin of the autonomous vehicle.

While autonomous vehicle 300 is operating in a manual driving mode by one or more users, for each of the users, data collection module 306 may automatically collect, for example on a continuing basis, driving information of the autonomous vehicle 300. In some embodiments, the data collection module 306 may execute instructions to collect and communicate the driving information, over network 102, to the server 103 (as indicated by driving statistics 122 of Figure 1) while the autonomous vehicle 300 is online (i.e., while the autonomous vehicle 300 is communicatively coupled to the server 103). In some embodiments, the data collection module 306 may communicate with one or more sensors (e.g., steering sensor, throttle sensor, braking sensor, etc.) of sensor system 115 to obtain sensor information or data and determine driving commands issued at different points in time for a specific user of the autonomous vehicle 300. In some embodiments, the data collection module 306 may also communicate with server 104 (e.g., MPOI server) to obtain route selection information from one or more routes, for example, most frequently user selected routes. In some embodiments, the data collection module 306 may further communicate with the server 104 to obtain POI information, for example, visiting frequency of a specific location (e.g., home, work, personal point of interest). The collected driving statistics may be stored as part of driving statistics 312 in persistent storage device 352 (e.g., a hard disk).

Interactive interface 307 interactively interfaces with each of the users to obtain user-specific information from the user. For example, using user interface system 113 and/or infotainment system 114, the interactive interface 307 may exchange messages with the user in real-time. The interactive interface 307 may pose the user a series of questions selected, for example, from a question database and collect answers (i.e., user-specific information) from the user. The user-specific information may be stored as part of interactive data 314. In some embodiments, the series of questions are designed based on a vehicle application. For example, with respect to a personal assistant application, the interactive interface 307 may inquire about a spouse's date of birth, a specific action in relation to certain mood, family members, personal interests, and/or health condition.

Based on the driving statistics 122 and/or user-specific information, learning system 308 may invoke one or more machine learning models or algorithms (e.g., deep learning architectures such as deep neural networks, convolutional deep neural networks, deep belief networks and/or recurrent neural networks) to continuously determine or learn one or more user driving behaviors and preferences of the user for one or more predetermined driving scenarios. Learning system 308 may include a machine learning engine such as machine learning engine 120. Upon determining the driving behaviors and preferences, the learning system 308 may generate and/or update one or more driving profiles 313 to reflect the determined driving behaviors and preferences.

Note that driving statistics 312 may be downloaded to a centralized server such as data analytics server 103 to be utilized to compile one or more driving profiles such as driving profiles 123 offline. Driving profiles 123 of a user may be then uploaded onto vehicle 300 as part of driving profiles 313 as initial driving profiles. Driving profiles 313 are then periodically updated by learning system 308 based on the ongoing collected driving statistics 312. Driving profiles 313 may include a number of driving profiles, each corresponding to a specific situation or driving scenario. For example, a driving profile may be a route selection profile utilized for route selection, where the route selection profile of a user may include information specifying the user preference on route selection, e.g., most frequently selected routes. A driving profile may be a lane changing profile that includes a user preference regarding how to change lane (e.g., speed, angle, distance of lane changing). A driving profile may be associated with points of interest of a user that the user most likely would stop by (e.g., shopping mall, preferred parking garage).

For example, if the learning system 308 learns specific routing selection, driving style preference, and/or parking direction preference from the user under a particular driving scenario, the learning system 308 would generate a driving profile for the user that reflect such selection and preferences under similar or same driving scenario. In some embodiments, the learning system 308 may learn a mood of the user and generate a driving profile having parameters that would suggest taking a specific route based on the mood. As an example, if the learning system 308 determines that the user is in a sad mood, the learning system 308 may generate a driving profile that would suggest taking a beach route on the way home. In some embodiments, the learning system 308 may learn personal information of a family member of the user, and produce a driving profile having parameters that would suggest taking a specific action based on the information.

For instance, if the learning system 308 learns that today is the birthday of the user's spouse, the learning system 308 may generate a driving profile that would suggest taking the user to a flower shop or bring the user and his/her spouse to a favorite local restaurant. In some embodiments, the learning system 308 may learn personal interests of the user and generate a driving profile that would present media content (e.g., advertisement, recommended movie, music) to the user while the user is riding within the autonomous vehicle, for example using the infotainment system 114. In some embodiments, subsequent to determining the driving behaviors and preferences of the user, the learning system 308 may produce and communicate additional questions to the interactive interface 307 for posing to the user to acquire additional user-specific information from the user. The user-specific information can also be utilized to compile or update driving profiles 313 on an ongoing basis.

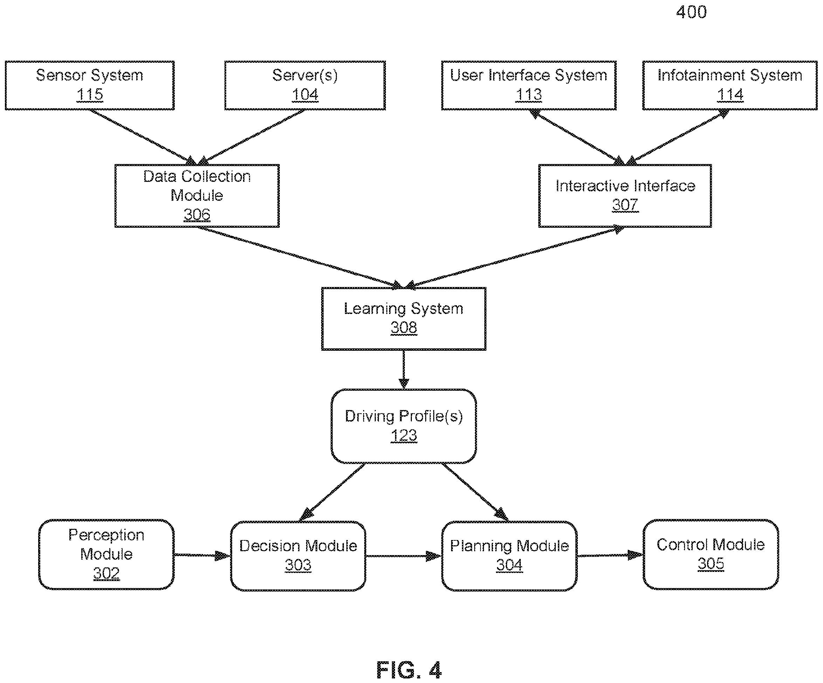

Figure 4 is a block diagram illustrating an example of a system for determining individual driving behaviors and preferences according to one embodiment of the invention. In Figure 4, the system 400 includes data collection module 306 coupled to sensor system 115 and server(s) 104, and interactive interface 307 communicatively coupled to user interface system 113 and infotainment system 114. The system 400 further includes learning system 308 coupled to the data collection module 306 and interactive interface 307, with the learning system 308 producing driving profile(s) 123.

As illustrated in Figure 4, the data collection module 306 may receive and collect (e.g., on a continuing basis) driving statistics from the sensor system 115 and server(s) 104. In a parallel fashion, the interactive interface 307 may communicate with the user interface system 113 and/or infotainment system 114 to obtain user-specific information from a user of an autonomous vehicle. The driving statistics and user-specific information are communicated to the learning system 308 to determine driving behaviors and preferences of the user. In some embodiments, the learning system 308 may communicate information (e.g., additional questions) to the interactive interface 307 to obtain additional user-specific information from the user. Based on the determined driving behaviors and preferences of the user, the learning system 308 may generate driving profile(s) 123 having parameters that reflect the determined driving behaviors and preferences of the user.

The driving profile(s) 123 for example may be utilized by one or more vehicle applications (e.g., route selection, lane changing) to control the autonomous vehicle under similar or same driving scenarios when the user is a passenger of the autonomous vehicle operating in autonomous driving mode. For example, with respect to driving style, the driving profile(s) 123 may include driving parameters (e.g., throttle, braking, turning commands) for making driving decisions (e.g., overtake, yield, pass, turn on a red light), and controlling driving speed (e.g., turning speed, lane changing speed, junction speed), acceleration (e.g., initial acceleration, deceleration, sudden braking), and/or directional heading for parking. In some embodiments, with respect to route preference, the driving profile(s) 123 may include routing parameters (e.g., origins, destinations, waypoints) for controlling the autonomous vehicle to travel on one or more selected routes (e.g., rural, urban, freeway, highway, and/or commute route). In some embodiments, with respect to a personal assistant application, the driving profile(s) 123 may include user parameters corresponding to different personality traits and interests of the user. Such user parameters may be utilized to perform certain personal request from the user and/or present media content (e.g., advertisement, recommended movie, music) to the user. In some embodiments, with respect to a POI application, the driving profile(s) 123 may include POI parameters (e.g., destinations, waypoints) for controlling the autonomous vehicle to take the user to a particular POI (e.g., local businesses, attractions, schools, churches, etc.). In some embodiments, with respect to an emergency application, the driving profile(s) 123 may include rescue parameters for controlling the autonomous vehicle to perform rescue operations (e.g., saving the user when he/she is in danger) when an emergency situation is detected.

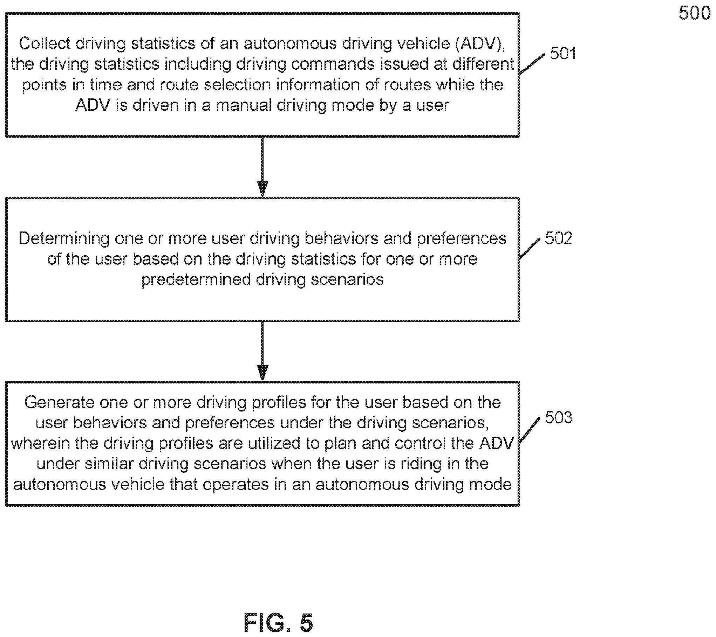

Figure 5 is a flow diagram illustrating a process of data collection and profile generation according to one embodiment of the invention. Process 500 may be performed by processing logic which may include software, hardware, or a combination thereof. For example, process 500 may be performed by the perception and planning system 110 or data analytics system 103 of Figure 1. Referring to Figure 5, in operation 501, processing logic collects driving statistics of an autonomous driving vehicle. The driving statistics may include control commands issued at different points in time and the vehicle responses in response to the commands. The driving statistics may be captured and recorded during a manual driving mode of a user. In operation 502, processing logic determines one or more user driving behaviors and preferences of the user based on the driving statistics. In one embodiment, a machine-learning engine is invoked to perform an analysis on the driving statistics to derive the user behaviors and user preferences. In operation 503, processing logic generates or compiles one or more driving profiles for the user based on the user behaviors and user preferences under different driving scenarios (e.g., route selection, lane changing). The driving profiles are utilized subsequently under the similar driving scenarios.

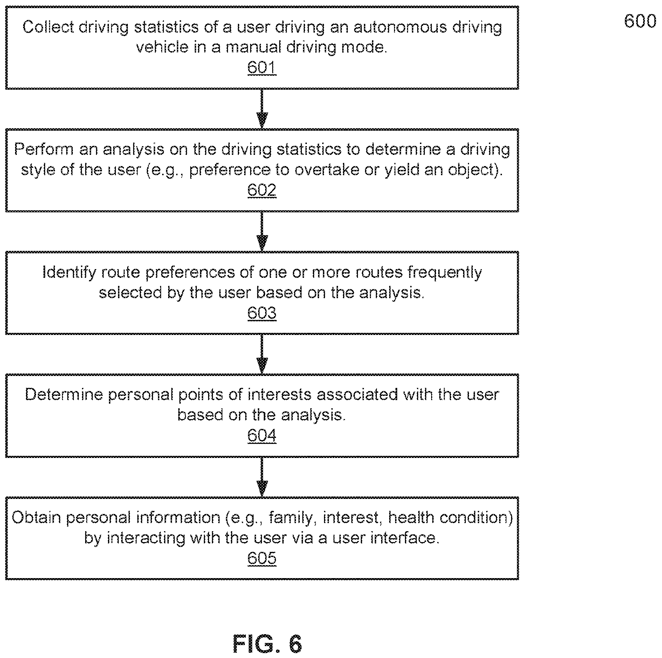

Figure 6 is a flow diagram illustrating a process of profile application according to one embodiment of the invention. Process 600 may be performed by processing logic which may include software, hardware, or a combination thereof. For example, process 600 may be performed by the perception and planning system 110 of Figure 1. Referring to Figure 6, in operation 601, processing logic collects driving statistics of a user who drives an autonomous vehicle in a manual driving mode. In operation 602, processing logic performs an analysis on the driving statistics to determine a driving style of the user (e.g., user preferences on route selection, tendency to overtake or yield an object, speed and angle to change lane). In operation 603, processing logic identifies route preferences of one or more routes frequently selected by the user based on the analysis. In operation 604, processing logic determines personal points of interests associated with the user based on the analysis. In operation 605, processing logic obtains personal information (e.g., family, personal interest, health condition) by interacting with the user via a user interface. These information can be utilized to compile one or more driving profiles for the user.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

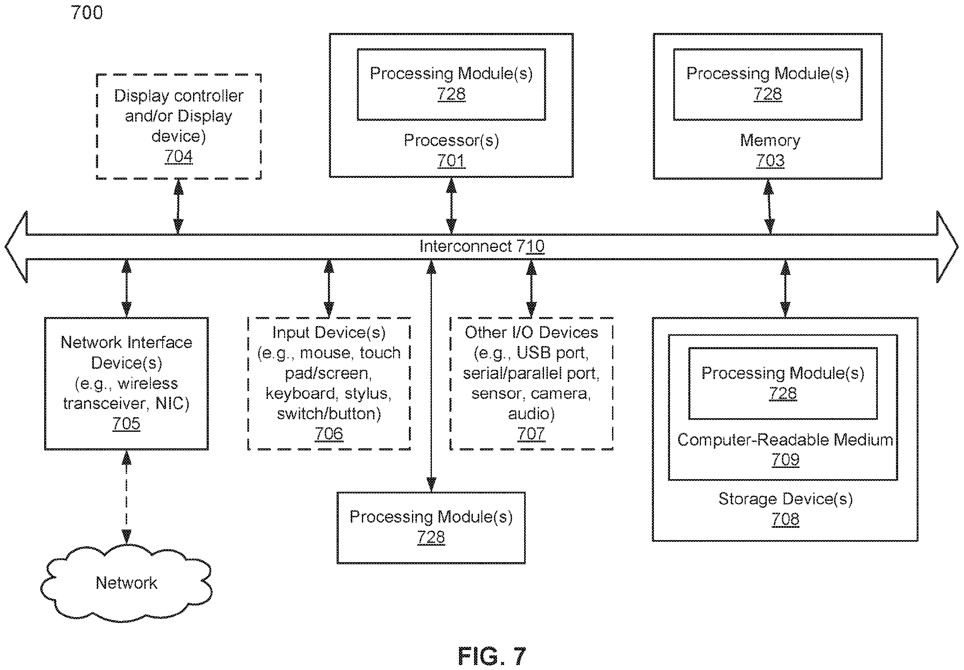

Figure 7 is a block diagram illustrating an example of a data processing system which may be used with one embodiment of the invention. For example, system 700 may represent any of data processing systems described above performing any of the processes or methods described above, such as, for example, data processing system 110 or any of servers 103-104 of Figure 1. System 700 can include many different components. These components can be implemented as integrated circuits (ICs), portions thereof, discrete electronic devices, or other modules adapted to a circuit board such as a motherboard or add-in card of the computer system, or as components otherwise incorporated within a chassis of the computer system.

Note also that system 700 is intended to show a high level view of many components of the computer system. However, it is to be understood that additional components may be present in certain implementations and furthermore, different arrangement of the components shown may occur in other implementations. System 700 may represent a desktop, a laptop, a tablet, a server, a mobile phone, a media player, a personal digital assistant (PDA), a Smartwatch, a personal communicator, a gaming device, a network router or hub, a wireless access point (AP) or repeater, a set-top box, or a combination thereof. Further, while only a single machine or system is illustrated, the term "machine" or "system" shall also be taken to include any collection of machines or systems that individually or jointly execute a set (or multiple sets) of instructions to perform any one or more of the methodologies discussed herein.

In one embodiment, system 700 includes processor 701, memory 703, and devices 705-708 via a bus or an interconnect 710. Processor 701 may represent a single processor or multiple processors with a single processor core or multiple processor cores included therein. Processor 701 may represent one or more general-purpose processors such as a microprocessor, a central processing unit (CPU), or the like. More particularly, processor 701 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 701 may also be one or more special-purpose processors such as an application specific integrated circuit (ASIC), a cellular or baseband processor, a field programmable gate array (FPGA), a digital signal processor (DSP), a network processor, a graphics processor, a network processor, a communications processor, a cryptographic processor, a co-processor, an embedded processor, or any other type of logic capable of processing instructions.

Processor 701, which may be a low power multi-core processor socket such as an ultra-low voltage processor, may act as a main processing unit and central hub for communication with the various components of the system. Such processor can be implemented as a system on chip (SoC). Processor 701 is configured to execute instructions for performing the operations and steps discussed herein. System 700 may further include a graphics interface that communicates with optional graphics subsystem 704, which may include a display controller, a graphics processor, and/or a display device.

Processor 701 may communicate with memory 703, which in one embodiment can be implemented via multiple memory devices to provide for a given amount of system memory. Memory 703 may include one or more volatile storage (or memory) devices such as random access memory (RAM), dynamic RAM (DRAM), synchronous DRAM (SDRAM), static RAM (SRAM), or other types of storage devices. Memory 703 may store information including sequences of instructions that are executed by processor 701, or any other device. For example, executable code and/or data of a variety of operating systems, device drivers, firmware (e.g., input output basic system or BIOS), and/or applications can be loaded in memory 703 and executed by processor 701. An operating system can be any kind of operating systems, such as, for example, Robot Operating System (ROS), Windows® operating system from Microsoft®, Mac OS®/iOS® from Apple, Android® from Google®, LINUX, UNIX, or other real-time or embedded operating systems.

System 700 may further include IO devices such as devices 705-708, including network interface device(s) 705, optional input device(s) 706, and other optional IO device(s) 707. Network interface device 705 may include a wireless transceiver and/or a network interface card (NIC). The wireless transceiver may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, or a combination thereof. The NIC may be an Ethernet card.

Input device(s) 706 may include a mouse, a touch pad, a touch sensitive screen (which may be integrated with display device 704), a pointer device such as a stylus, and/or a keyboard (e.g., physical keyboard or a virtual keyboard displayed as part of a touch sensitive screen). For example, input device 706 may include a touch screen controller coupled to a touch screen. The touch screen and touch screen controller can, for example, detect contact and movement or break thereof using any of touch sensitivity technologies, including but not limited to capacitive, resistive, infrared, and surface acoustic wave technologies, as well as other proximity sensor arrays or other elements for determining one or more points of contact with the touch screen.

IO devices 707 may include an audio device. An audio device may include a speaker and/or a microphone to facilitate voice-enabled functions, such as voice recognition, voice replication, digital recording, and/or telephony functions. Other IO devices 707 may further include universal serial bus (USB) port(s), parallel port(s), serial port(s), a printer, a network interface, a bus bridge (e.g., a PCI-PCI bridge), sensor(s) (e.g., a motion sensor such as an accelerometer, gyroscope, a magnetometer, a light sensor, compass, a proximity sensor, etc.), or a combination thereof. Devices 707 may further include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips. Certain sensors may be coupled to interconnect 710 via a sensor hub (not shown), while other devices such as a keyboard or thermal sensor may be controlled by an embedded controller (not shown), dependent upon the specific configuration or design of system 700.

To provide for persistent storage of information such as data, applications, one or more operating systems and so forth, a mass storage (not shown) may also couple to processor 701. In various embodiments, to enable a thinner and lighter system design as well as to improve system responsiveness, this mass storage may be implemented via a solid state device (SSD). However in other embodiments, the mass storage may primarily be implemented using a hard disk drive (HDD) with a smaller amount of SSD storage to act as a SSD cache to enable non-volatile storage of context state and other such information during power down events so that a fast power up can occur on re-initiation of system activities. Also a flash device may be coupled to processor 701, e.g., via a serial peripheral interface (SPI). This flash device may provide for non-volatile storage of system software, including BIOS as well as other firmware of the system.

Storage device 708 may include computer-accessible storage medium 709 (also known as a machine-readable storage medium or a computer-readable medium) on which is stored one or more sets of instructions or software (e.g., module, unit, and/or logic 728) embodying any one or more of the methodologies or functions described herein. Processing module/unit/logic 728 may represent any of the components described above, such as, for example, planning module 304, control module 305, or any of the modules 306-308 (alone or in combination). Processing module/unit/logic 728 may also reside, completely or at least partially, within memory 703 and/or within processor 701 during execution thereof by data processing system 700, memory 703 and processor 701 also constituting machine-accessible storage media. Processing module/unit/logic 728 may further be transmitted or received over a network via network interface device 705.

Computer-readable storage medium 709 may also be used to store the some software functionalities described above persistently. While computer-readable storage medium 709 is shown in an exemplary embodiment to be a single medium, the term "computer-readable storage medium" should be taken to include a single medium or multiple media (e.g., a centralized or distributed database, and/or associated caches and servers) that store the one or more sets of instructions. The terms "computer-readable storage medium" shall also be taken to include any medium that is capable of storing or encoding a set of instructions for execution by the machine and that cause the machine to perform any one or more of the methodologies of the present invention. The term "computer-readable storage medium" shall accordingly be taken to include, but not be limited to, solid-state memories, and optical and magnetic media, or any other non-transitory machine-readable medium.

Processing module/unit/logic 728, components and other features described herein can be implemented as discrete hardware components or integrated in the functionality of hardware components such as ASICS, FPGAs, DSPs or similar devices. In addition, processing module/unit/logic 728 can be implemented as firmware or functional circuitry within hardware devices. Further, processing module/unit/logic 728 can be implemented in any combination hardware devices and software components.

Note that while system 700 is illustrated with various components of a data processing system, it is not intended to represent any particular architecture or manner of interconnecting the components; as such details are not germane to embodiments of the present invention. It will also be appreciated that network computers, handheld computers, mobile phones, servers, and/or other data processing systems which have fewer components or perhaps more components may also be used with embodiments of the invention.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the invention also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present invention are not described with reference to any particular programming language. It will be appreciated that a variety of programming languages may be used to implement the teachings of embodiments of the invention as described herein.

In the foregoing specification, embodiments of the invention have been described with reference to specific exemplary embodiments thereof. The specification and drawings are, accordingly, to be regarded in an illustrative sense rather than a restrictive sense.

## Claims

1. A computer-implemented method for operating an autonomous driving vehicle, the method comprising:
collecting (501) driving statistics of an autonomous driving vehicle (ADV), the driving statistics including driving commands issued at different points in time and route selection information of a plurality of routes while the ADV is driven in a manual driving mode by a user;
obtaining at least one of a mood or health condition of the user in real time;
determining (502) one or more user driving behaviors and preferences of the user based on the driving statistics for one or more predetermined driving scenarios and the at least one of a mood or health condition of the user obtained in real time;
generating (503) one or more driving profiles for the user based on the user behaviors and preferences under the driving scenarios, wherein the generated driving profiles are utilized to plan and control the ADV under similar driving scenarios when the user is riding in the autonomous vehicle that operates in an autonomous driving mode;
the method being **characterized by** further comprising:
determining, based on at least one of location and route information, map and point of interest information, or real-time traffic information, types of content suitable for the driving scenarios;
performing, based on the types of content suitable for the driving scenarios, a lookup operation in a content index to identify content item candidates;
ranking the identified content item candidates based on the generated driving profiles;
selecting, from the identified content item candidates, a content item having a ranking score above a predetermined threshold; and
displaying the selected content item on a display device within the autonomous vehicle.

2. The method of claim 1, wherein at least one of the driving profiles includes information indicating whether a user prefers to overtake or yield an object under a similar driving scenario.

3. The method of claim 1, wherein at least one of the driving profiles includes information indicating an average speed of lane changing preferred by the user, wherein the driving profiles are generated in view of the average speed of lane changing preferred by the user under a similar lane changing driving scenario.

4. The method of claim 1, wherein at least one of the driving profiles includes information indicating one or more preferred routes that were most frequently selected by the user during prior driving, wherein the driving profiles are generated in view of the preferred routes in selecting a route for the ADV.

5. The method of claim 1, further comprising:
in response to determining that the ADV is driven in the autonomous driving mode, identifying a first driving scenario based on a perception surrounding the ADV;
accessing one or more of the driving profiles to determine one or more user preferences associated with the first driving scenario; and
generating a driving profile based on the one or more user preferences to drive the ADV under the first driving scenario.

6. The method of claim 5, wherein accessing one or more of the driving profiles to determine one or more user preferences associated with the first driving scenario comprises:
identifying a point of interest associated with the first driving scenario;
determining that the point interest is associated with a location the user frequently stopped during prior driving; and
recommending the point of interest to the user, wherein the driving profiles are generated based on a user response to the recommendation.

7. The method of claim 1, further comprising:
prompting the user of the ADV with one or more questions to obtain user-specific information from the user; and
determining the one or more user driving behaviors and preferences of the user based on the user-specific information.

8. A non-transitory machine-readable medium having instructions stored therein, which when executed by a processor, cause the processor to perform operations for operating an autonomous vehicle, the operations comprising:
collecting (501) driving statistics of an autonomous driving vehicle (ADV), the driving statistics including driving commands issued at different points in time and route selection information of a plurality of routes while the ADV is driven in a manual driving mode by a user;
obtaining at least one of a mood or health condition of the user in real time;
determining (502) one or more user driving behaviors and preferences of the user based on the driving statistics for one or more predetermined driving scenarios and the at least one of a mood or health condition of the user obtained in real time;
generating (503) one or more driving profiles for the user based on the user behaviors and preferences under the driving scenarios, wherein the generated driving profiles are utilized to plan and control the ADV under similar driving scenarios when the user is riding in the autonomous vehicle that operates in an autonomous driving mode;
the operations being **characterized by** further comprising:
determining, based on at least one of location and route information, map and point of interest information, or real-time traffic information, types of content suitable for the driving scenarios;
performing, based on the types of content suitable for the driving scenarios, a lookup operation in a content index to identify content item candidates;
ranking the identified content item candidates based on the generated driving profiles;
selecting, from the identified content item candidates, a content item having a ranking score above a predetermined threshold; and
displaying the selected content item on a display device within the autonomous vehicle.

9. The machine-readable medium of claim 8, wherein at least one of the driving profiles includes information indicating whether a user prefers to overtake or yield an object under a similar driving scenario; or
wherein at least one of the driving profiles includes information indicating an average speed of lane changing preferred by the user, wherein the driving profiles are generated in view of the average speed of lane changing preferred by the user under a similar lane changing driving scenario; or
wherein at least one of the driving profiles includes information indicating one or more preferred routes that were most frequently selected by the user during prior driving, wherein the driving profiles are generated in view of the preferred routes in selecting a route for the ADV.

10. The machine-readable medium of claim 8, wherein the operations further comprise:
in response to determining that the ADV is driven in the autonomous driving mode, identifying a first driving scenario based on a perception surrounding the ADV;
accessing one or more of the driving profiles to determine one or more user preferences associated with the first driving scenario; and
generating a driving profile based on the one or more user preferences to drive the ADV under the first driving scenario;
preferably, accessing one or more of the driving profiles to determine one or more user preferences associated with the first driving scenario comprises:
identifying a point of interest associated with the first driving scenario;
determining that the point interest is associated with a location the user frequently stopped during prior driving; and
recommending the point of interest to the user, wherein the driving profiles are generated based on a user response to the recommendation.

11. The machine-readable medium of claim 8, wherein the operations further comprise
prompting the user of the ADV with one or more questions to obtain user-specific information from the user; and
determining the one or more user driving behaviors and preferences of the user based on the user-specific information.

12. A data processing system, comprising:
a processor; and
a memory coupled to the processor to store instructions, which when executed by the processor, cause the processor to perform operations for operating an autonomous vehicle, the operations including:
collecting (501) driving statistics of an autonomous driving vehicle (ADV), the driving statistics including driving commands issued at different points in time and route selection information of a plurality of routes while the ADV is driven in a manual driving mode by a user, obtaining at least one of a mood or health condition of the user in real time;
determining (502) one or more user driving behaviors and preferences of the user based on the driving statistics for one or more predetermined driving scenarios and the at least one of a mood or health condition of the user obtained in real time, generating (503) one or more driving profiles for the user based on the user behaviors and preferences under the driving scenarios, wherein the generated driving profiles are utilized to plan and control the ADV under similar driving scenarios when the user is riding in the autonomous vehicle that operates in an autonomous driving mode;
the operations being **characterized by** further comprising:
determining, based on at least one of location and route information, map and point of interest information, or real-time traffic information, types of content suitable for the driving scenarios;
performing, based on the types of content suitable for the driving scenarios, a lookup operation in a content index to identify content item candidates;
ranking the identified content item candidates based on the generated driving profiles;
selecting, from the identified content item candidates, a content item having a ranking score above a predetermined threshold; and displaying the selected content item on a display device within the autonomous vehicle.

13. The system of claim 12, wherein at least one of the driving profiles includes information indicating whether a user prefers to overtake or yield an object under a similar driving scenario; or
wherein at least one of the driving profiles includes information indicating an average speed of lane changing preferred by the user, wherein the driving profiles are generated in view of the average speed of lane changing preferred by the user under a similar lane changing driving scenario; or
wherein at least one of the driving profiles includes information indicating one or more preferred routes that were most frequently selected by the user during prior driving, wherein the driving profiles are generated in view of the preferred routes in selecting a route for the ADV.

14. The system of claim 12, wherein the operations further comprise:
in response to determining that the ADV is driven in the autonomous driving mode, identifying a first driving scenario based on a perception surrounding the ADV;
accessing one or more of the driving profiles to determine one or more user preferences associated with the first driving scenario; and
generating a driving profile based on the one or more user preferences to drive the ADV under the first driving scenario;
preferably, accessing one or more of the driving profiles to determine one or more user preferences associated with the first driving scenario comprises:
identifying a point of interest associated with the first driving scenario;
determining that the point interest is associated with a location the user frequently stopped during prior driving; and
recommending the point of interest to the user, wherein the driving profiles are generated based on a user response to the recommendation.

15. The system of claim 12, wherein the operations further comprise
prompting the user of the ADV with one or more questions to obtain user-specific information from the user; and
determining the one or more user driving behaviors and preferences of the user based on the user-specific information.

## Patentansprüche

1. Computerimplementiertes Verfahren zum Bedienen eines autonom fahrenden Fahrzeugs, wobei das Verfahren Folgendes umfasst:
Sammeln (501) der Fahrstatistik eines autonom fahrenden Fahrfahrzeugs (ADV, autonomous driving vehicle), wobei die Fahrstatistik zu verschiedenen Zeitpunkten ausgegebene Fahrbefehle und Routenauswahlinformationen mehrerer Routen, während das ADV von einem Benutzer in einem manuellen Fahrmodus gefahren wird, beinhaltet;
Erhalten wenigstens eines Stimmungs- oder Gesundheitszustands des Benutzers in Echtzeit;
Bestimmen (502) eines oder mehrerer Benutzerfahrverhalten und - präferenzen des Benutzers des Benutzers basierend auf der Fahrstatistik für ein oder mehrere vorbestimmte Fahrszenarien und des wenigstens einen in Echtzeit erhaltenen Stimmungs- oder Gesundheitszustands des Benutzers;
Erzeugen (503) eines oder mehrerer Fahrprofile für den Benutzer basierend auf dem Benutzerverhalten und den -präferenzen unter den Fahrszenarien, wobei die erzeugten Fahrprofile verwendet werden, um das ADV unter ähnlichen Fahrszenarien zu planen und zu steuern, wenn der Benutzer in dem autonomen Fahrzeug fährt das in einem autonomen Fahrmodus arbeitet;
wobei das Verfahren durch Folgendes gekennzeichnet ist:
Bestimmen von Inhaltstypen, die für die Fahrszenarien geeignet sind, basierend auf wenigstens einer von Standort- und Routeninformationen, Karten- und Sonderzielinformationen oder Verkehrsinformationen in Echtzeit;
Ausführen einer Suchoperation in einem Inhaltsindex basierend auf den für die Fahrszenarien geeigneten Inhaltstypen, um Kandidaten für Inhaltselemente zu identifizieren;
Einstufung der identifizierten Kandidaten für Inhaltselemente basierend auf den erzeugten Fahrprofilen;
Auswählen eines Inhaltselements mit einer Einstufungspunktzahl über einem vorbestimmten Schwellenwert aus den identifizierten Kandidaten für Inhaltselemente; und
Anzeigen des ausgewählten Inhaltselements auf einem Anzeigegerät im autonomen Fahrzeug.

2. Verfahren nach Anspruch 1, wobei wenigstens eines der Fahrprofile Informationen enthält, die angeben, ob ein Benutzer es vorzieht, ein Objekt unter einem ähnlichen Fahrszenario zu überholen oder nachzugeben.

3. Verfahren nach Anspruch 1, wobei wenigstens eines der Fahrprofile Informationen enthält, die eine vom Benutzer bevorzugte Durchschnittsgeschwindigkeit des Spurwechsels angeben, wobei die Fahrprofile im Hinblick auf die vom Benutzer bevorzugte Durchschnittsgeschwindigkeit des Spurwechsels unter einem ähnlichen Fahrszenario des Spurwechsels erzeugt werden.

4. Verfahren nach Anspruch 1, wobei wenigstens eines der Fahrprofile Informationen enthält, die eine oder mehrere bevorzugte Routen angeben, die vom Benutzer während des vorherigen Fahrens am häufigsten ausgewählt wurden, wobei die Fahrprofile im Hinblick auf die bevorzugten Routen bei der Auswahl einer Route für das ADV erzeugt werden.

5. Verfahren nach Anspruch 1, ferner umfassend:
als Reaktion auf das Bestimmen, dass das ADV im autonomen Fahrmodus gefahren wird, Identifizieren eines ersten Fahrszenarios basierend auf einer Wahrnehmung, die das ADV umgibt;
Zugreifen auf eines oder mehrere der Fahrprofile, um eine oder mehrere Benutzerpräferenzen zu bestimmen, die dem ersten Fahrszenario zugeordnet sind; und
Erzeugen eines Fahrprofils basierend auf einer oder mehreren Benutzerpräferenzen zum Fahren des ADV im ersten Fahrszenario.

6. Verfahren nach Anspruch 5, wobei das Zugreifen auf eines oder mehrere der Fahrprofile zum Bestimmen einer oder mehrerer Benutzerpräferenzen, die dem ersten Fahrszenario zugeordnet sind, Folgendes umfasst:
Identifizieren eines Punktes von Interesse, der dem ersten Fahrszenario zugeordnet ist;
Bestimmen, dass das Punktinteresse einem Standort zugeordnet ist, in dem der Benutzer während des vorherigen Fahrens häufig angehalten hat; und
Empfehlen des Punktes von Interesse dem Benutzer, wobei die Fahrprofile basierend auf einer Benutzerantwort auf die Empfehlung erzeugt werden.

7. Verfahren nach Anspruch 1, ferner umfassend:
Auffordern des Benutzers des ADV mit einer oder mehreren Fragen, um benutzerspezifische Informationen vom Benutzer zu erhalten; und
Bestimmen eines oder mehrerer Benutzerfahrverhalten und -präferenzen des Benutzers basierend auf den benutzerspezifischen Informationen.

8. Nichtflüchtiges maschinenlesbares Medium mit darin gespeicherten Anweisungen, die, wenn sie von einem Prozessor ausgeführt werden, bewirken, dass der Prozessor, Operationen zum Bedienen eines autonomen Fahrzeugs ausführt, wobei die Operationen Folgendes umfassen:
Sammeln (501) der Fahrstatistik eines autonom fahrenden Fahrfahrzeugs (ADV, autonomous driving vehicle), wobei die Fahrstatistik zu verschiedenen Zeitpunkten ausgegebene Fahrbefehle und Routenauswahlinformationen mehrerer Routen beinhaltet, während das ADV von einem Benutzer in einem manuellen Fahrmodus gefahren wird;
Erhalten wenigstens eines Stimmungs- oder Gesundheitszustands des Benutzers in Echtzeit;
Bestimmen (502) eines oder mehrerer Benutzerfahrverhalten und - präferenzen des Benutzers des Benutzers basierend auf der Fahrstatistik für ein oder mehrere vorbestimmte Fahrszenarien und des wenigstens einen in Echtzeit erhaltenen Stimmungs- oder Gesundheitszustands des Benutzers;
Erzeugen (503) eines oder mehrerer Fahrprofile für den Benutzer basierend auf dem Benutzerverhalten und den -präferenzen unter den Fahrszenarien, wobei die erzeugten Fahrprofile verwendet werden, um das ADV unter ähnlichen Fahrszenarien zu planen und zu steuern, wenn der Benutzer in dem autonomen Fahrzeug fährt das in einem autonomen Fahrmodus arbeitet;
wobei Operationen durch Folgendes gekennzeichnet sind:
Bestimmen von Inhaltstypen, die für die Fahrszenarien geeignet sind, basierend auf wenigstens einer von Standort- und Routeninformationen, Karten- und Sonderzielinformationen oder Verkehrsinformationen in Echtzeit;
Ausführen einer Suchoperation in einem Inhaltsindex basierend auf den für die Fahrszenarien geeigneten Inhaltstypen, um Kandidaten für Inhaltselemente zu identifizieren;
Einstufung der identifizierten Kandidaten für Inhaltselemente basierend auf den erzeugten Fahrprofilen;
Auswählen eines Inhaltselements mit einer Einstufungspunktzahl über einem vorbestimmten Schwellenwert aus den identifizierten Kandidaten für Inhaltselemente; und
Anzeigen des ausgewählten Inhaltselements auf einem Anzeigegerät im autonomen Fahrzeug.

9. Maschinenlesbares Medium nach Anspruch 8, wobei wenigstens eines der Fahrprofile Informationen enthält, die angeben, ob ein Benutzer es vorzieht, ein Objekt unter einem ähnlichen Fahrszenario zu überholen oder nachzugeben; oder
wobei wenigstens eines der Fahrprofile Informationen enthält, die eine vom Benutzer bevorzugte Durchschnittsgeschwindigkeit des Spurwechsels angeben, wobei die Fahrprofile im Hinblick auf die vom Benutzer bevorzugte Durchschnittsgeschwindigkeit des Spurwechsels unter einem ähnlichen Fahrszenario des Spurwechsels erzeugt werden; oder
wobei wenigstens eines der Fahrprofile Informationen enthält, die eine oder mehrere bevorzugte Routen angeben, die vom Benutzer während des vorherigen Fahrens am häufigsten ausgewählt wurden, wobei die Fahrprofile im Hinblick auf die bevorzugten Routen bei der Auswahl einer Route für das ADV erzeugt werden.

10. Maschinenlesbares Medium nach Anspruch 8, wobei die Operationen ferner Folgendes umfassen:
als Reaktion auf das Bestimmen, dass das ADV im autonomen Fahrmodus gefahren wird, Identifizieren eines ersten Fahrszenarios basierend auf einer Wahrnehmung, die das ADV umgibt;
Zugreifen auf eines oder mehrere der Fahrprofile, um eine oder mehrere Benutzerpräferenzen zu bestimmen, die dem ersten Fahrszenario zugeordnet sind; und
Erzeugen eines Fahrprofils basierend auf einer oder mehreren Benutzerpräferenzen zum Fahren des ADV im ersten Fahrszenario;
Vorzugsweise umfasst das Zugreifen auf eines oder mehrere der Fahrprofile, um eine oder mehrere Benutzerpräferenzen zu bestimmen, die dem ersten Fahrszenario zugeordnet sind: Identifizieren eines Punktes von Interesse, der dem ersten Fahrszenario zugeordnet ist; Bestimmen, dass das Punktinteresse einem Standort zugeordnet ist, in dem der Benutzer während des vorherigen Fahrens häufig angehalten hat; und
Empfehlen des Punktes von Interesse dem Benutzer, wobei die Fahrprofile basierend auf einer Benutzerantwort auf die Empfehlung erzeugt werden.

11. Maschinenlesbares Medium nach Anspruch 8, wobei die Operationen ferner das Auffordern des Benutzers des ADV mit einer oder mehreren Fragen umfassen, um benutzerspezifische Informationen vom Benutzer zu erhalten; und
Bestimmen eines oder mehrerer Benutzerfahrverhalten und -präferenzen des Benutzers basierend auf den benutzerspezifischen Informationen.

12. Datenverarbeitungssystem, umfassend:
einen Prozessor; und
einen mit dem Prozessor gekoppelten Speicher zum Speichern von Anweisungen, die, wenn sie von dem Prozessor ausgeführt werden, bewirken, dass der Prozessor Operationen zum Bedienen eines autonomen Fahrzeugs ausführt, wobei die Operationen Folgendes umfassen:
Sammeln (501) der Fahrstatistik eines autonom fahrenden Fahrfahrzeugs (ADV, autonomous driving vehicle), wobei die Fahrstatistik zu verschiedenen Zeitpunkten ausgegebene Fahrbefehle und Routenauswahlinformationen mehrerer Routen beinhaltet, während das ADV von einem Benutzer in einem manuellen Fahrmodus gefahren wird,
Erhalten wenigstens eines Stimmungs- oder Gesundheitszustands des Benutzers in Echtzeit;
Bestimmen (502) eines oder mehrerer Benutzerfahrverhalten und - präferenzen des Benutzers basierend auf der Fahrstatistik für ein oder mehrere vorbestimmte Fahrszenarien und des wenigstens einen Stimmungs- oder Gesundheitszustands des Benutzers, der in Echtzeit erhalten wird,
Erzeugen (503) eines oder mehrerer Fahrprofile für den Benutzer basierend auf den Benutzerfahrverhalten und -präferenzen unter den Fahrszenarien, wobei die erzeugten Fahrprofile verwendet werden, um das ADV unter ähnlichen Fahrszenarien zu planen und zu steuern, wenn der Benutzer in dem autonomen Fahrzeug fährt, das in einem autonomen Fahrmodus arbeitet;
wobei Operationen durch Folgendes gekennzeichnet sind:
Bestimmen von Inhaltstypen, die für die Fahrszenarien geeignet sind, basierend auf wenigstens einer von Standort- und Routeninformationen, Karten- und Sonderzielinformationen oder Verkehrsinformationen in Echtzeit;
Ausführen einer Suchoperation in einem Inhaltsindex basierend auf den für die Fahrszenarien geeigneten Inhaltstypen, um Kandidaten für Inhaltselemente zu identifizieren;
Einstufung der identifizierten Kandidaten für Inhaltselemente basierend auf den erzeugten Fahrprofilen;
Auswählen eines Inhaltselements mit einer Einstufungspunktzahl über einem vorbestimmten Schwellenwert aus den identifizierten Kandidaten für Inhaltselemente; und
Anzeigen des ausgewählten Inhaltselements auf einem Anzeigegerät im autonomen Fahrzeug.

13. System nach Anspruch 12, wobei wenigstens eines der Fahrprofile Informationen enthält, die angeben, ob ein Benutzer es vorzieht, ein Objekt unter einem ähnlichen Fahrszenario zu überholen oder nachzugeben; oder wobei wenigstens eines der Fahrprofile Informationen enthält, die eine vom Benutzer bevorzugte Durchschnittsgeschwindigkeit des Spurwechsels angeben, wobei die Fahrprofile im Hinblick auf die vom Benutzer bevorzugte Durchschnittsgeschwindigkeit des Spurwechsels unter einem ähnlichen Fahrszenario des Spurwechsels erzeugt werden; oder
wobei wenigstens eines der Fahrprofile Informationen enthält, die eine oder mehrere bevorzugte Routen angeben, die vom Benutzer während des vorherigen Fahrens am häufigsten ausgewählt wurden, wobei die Fahrprofile im Hinblick auf die bevorzugten Routen bei der Auswahl einer Route für das ADV erzeugt werden.

14. System nach Anspruch 12, wobei die Operationen ferner Folgendes umfassen:
als Reaktion auf das Bestimmen, dass das ADV im autonomen Fahrmodus gefahren wird, Identifizieren eines ersten Fahrszenarios basierend auf einer Wahrnehmung, die das ADV umgibt;
Zugreifen auf eines oder mehrere der Fahrprofile, um eine oder mehrere Benutzerpräferenzen zu bestimmen, die dem ersten Fahrszenario zugeordnet sind; und
Erzeugen eines Fahrprofils basierend auf einer oder mehreren Benutzerpräferenzen zum Fahren des ADV im ersten Fahrszenario;
vorzugsweise umfasst das Zugreifen auf eines oder mehrere der Fahrprofile, um eine oder mehrere Benutzerpräferenzen zu bestimmen, die dem ersten Fahrszenario zugeordnet sind:
Identifizieren eines Punktes von Interesse, der dem ersten Fahrszenario zugeordnet ist;
Bestimmen, dass das Punktinteresse einem Standort zugeordnet ist, in dem der Benutzer während des vorherigen Fahrens häufig angehalten hat; und Empfehlen des Punktes von Interesse dem Benutzer, wobei die Fahrprofile basierend auf einer Benutzerantwort auf die Empfehlung erzeugt werden.

15. System nach Anspruch 12, wobei die Operationen ferner Folgendes umfassen
Auffordern des Benutzers des ADV mit einer oder mehreren Fragen, um benutzerspezifische Informationen vom Benutzer zu erhalten; und Bestimmen eines oder mehrerer Benutzerfahrverhalten und -präferenzen des Benutzers basierend auf den benutzerspezifischen Informationen.

## Revendications

1. Procédé, mis en œuvre par ordinateur, d'exploitation d'un véhicule à conduite autonome, le procédé comprenant les étapes ci-dessous consistant à :
collecter (501) des statistiques de conduite d'un véhicule à conduite autonome (ADV), les statistiques de conduite comprenant des instructions de conduite émises à différents instants, et des informations de sélection d'itinéraire d'une pluralité d'itinéraires tandis que le véhicule ADV est conduit en mode de conduite manuelle par un utilisateur ;
obtenir au moins un élément parmi l'humeur ou l'état de santé de l'utilisateur en temps réel ;
déterminer (502) un ou plusieurs comportements de conduite d'utilisateur et une ou plusieurs préférences de l'utilisateur sur la base des statistiques de conduite pour un ou plusieurs scénarios de conduite prédéterminés, et dudit au moins un élément parmi l'humeur ou l'état de santé de l'utilisateur obtenu en temps réel ;
générer (503) un ou plusieurs profils de conduite pour l'utilisateur sur la base des comportements d'utilisateur et des préférences d'utilisateur dans le cadre des scénarios de conduite, dans lequel les profils de conduite générés sont utilisés en vue de planifier et commander le véhicule ADV dans le cadre de scénarios de conduite similaires lorsque l'utilisateur se déplace dans le véhicule autonome qui fonctionne en mode de conduite autonome ;
le procédé étant **caractérisé en ce qu'**il comprend en outre les étapes ci-dessous consistant à :
déterminer, sur la base d'au moins l'une parmi des informations de localisation et d'itinéraire, des informations de carte et de point d'intérêt, ou des informations de trafic en temps réel, des types de contenu appropriés pour les scénarios de conduite ;
mettre en œuvre, sur la base des types de contenu appropriés pour les scénarios de conduite, une opération de recherche dans un index de contenu, en vue d'identifier des candidats d'éléments de contenu ;
classer les candidats d'éléments de contenu identifiés sur la base des profils de conduite générés ;
sélectionner, parmi les candidats d'éléments de contenu identifiés, un élément de contenu présentant un score de classement supérieur à un seuil prédéterminé ; et
afficher l'élément de contenu sélectionné sur un dispositif d'affichage à l'intérieur du véhicule autonome.

2. Procédé selon la revendication 1, dans lequel au moins l'un des profils de conduite inclut des informations indiquant si un utilisateur préfère dépasser ou céder la priorité à un objet dans le cadre d'un scénario de conduite similaire.

3. Procédé selon la revendication 1, dans lequel au moins l'un des profils de conduite inclut des informations indiquant une vitesse moyenne de changement de voie préférée par l'utilisateur, dans lequel les profils de conduite sont générés en fonction de la vitesse moyenne de changement de voie préférée par l'utilisateur dans le cadre d'un scénario de conduite de changement de voie similaire.

4. Procédé selon la revendication 1, dans lequel au moins l'un des profils de conduite inclut des informations indiquant un ou plusieurs itinéraires préférés qui ont été le plus fréquemment sélectionnés par l'utilisateur au cours d'une conduite antérieure, dans lequel les profils de conduite sont générés en fonction des itinéraires préférés dans le cadre de la sélection d'un itinéraire pour le véhicule ADV.

5. Procédé selon la revendication 1, comprenant en outre les étapes ci-dessous consistant à :
en réponse à une détermination selon laquelle le véhicule ADV est conduit en mode de conduite autonome, identifier un premier scénario de conduite sur la base d'une perception entourant le véhicule ADV ;
accéder à un ou plusieurs des profils de conduite en vue de déterminer une ou plusieurs préférences d'utilisateur associées au premier scénario de conduite ; et
générer un profil de conduite sur la base de ladite une ou desdites plusieurs préférences d'utilisateur pour conduire le véhicule ADV dans le cadre du premier scénario de conduite.

6. Procédé selon la revendication 5, dans lequel l'étape d'accès à un ou plusieurs des profils de conduite en vue de déterminer une ou plusieurs préférences d'utilisateur associées au premier scénario de conduite comprend les étapes ci-dessous consistant à :
identifier un point d'intérêt associé au premier scénario de conduite ;
déterminer que le point d'intérêt est associé à un emplacement où l'utilisateur s'est fréquemment arrêté au cours d'une conduite antérieure ; et
recommander le point d'intérêt à l'utilisateur, dans lequel les profils de conduite sont générés sur la base d'une réponse d'utilisateur à la recommandation.

7. Procédé selon la revendication 1, comprenant en outre les étapes ci-dessous consistant à :
solliciter l'utilisateur du véhicule ADV avec une ou plusieurs questions en vue d'obtenir de l'utilisateur des informations spécifiques à l'utilisateur ; et
déterminer ledit un ou lesdits plusieurs comportements de conduite et ladite une ou lesdites plusieurs préférences de l'utilisateur, sur la base des informations spécifiques à l'utilisateur.

8. Support non transitoire lisible par machine sur lequel sont stockées des instructions, qui, lorsqu'elles sont exécutées par un processeur, amènent le processeur à mettre en œuvre des opérations pour exploiter un véhicule autonome, les opérations comprenant les étapes ci-dessous consistant à :
collecter (501) des statistiques de conduite d'un véhicule à conduite autonome (ADV), les statistiques de conduite comprenant des instructions de conduite émises à différents instants, et des informations de sélection d'itinéraire d'une pluralité d'itinéraires tandis que le véhicule ADV est conduit en mode de conduite manuelle par un utilisateur ;
obtenir au moins un élément parmi l'humeur ou l'état de santé de l'utilisateur en temps réel ;
déterminer (502) un ou plusieurs comportements de conduite d'utilisateur et une ou plusieurs préférences de l'utilisateur sur la base des statistiques de conduite pour un ou plusieurs scénarios de conduite prédéterminés, et dudit au moins un élément parmi l'humeur ou l'état de santé de l'utilisateur obtenu en temps réel ;
générer (503) un ou plusieurs profils de conduite pour l'utilisateur sur la base des comportements d'utilisateur et des préférences d'utilisateur dans le cadre des scénarios de conduite, dans lequel les profils de conduite générés sont utilisés en vue de planifier et commander le véhicule ADV dans le cadre de scénarios de conduite similaires lorsque l'utilisateur se déplace dans le véhicule autonome qui fonctionne en mode de conduite autonome ;
les opérations étant **caractérisées en ce qu'**elles comprennent en outre les étapes ci-dessous consistant à :
déterminer, sur la base d'au moins l'une parmi des informations de localisation et d'itinéraire, des informations de carte et de point d'intérêt, ou des informations de trafic en temps réel, des types de contenu appropriés pour les scénarios de conduite ;
mettre en œuvre, sur la base des types de contenu appropriés pour les scénarios de conduite, une opération de recherche dans un index de contenu, en vue d'identifier des candidats d'éléments de contenu ;
classer les candidats d'éléments de contenu identifiés sur la base des profils de conduite générés ;
sélectionner, parmi les candidats d'éléments de contenu identifiés, un élément de contenu présentant un score de classement supérieur à un seuil prédéterminé ; et
afficher l'élément de contenu sélectionné sur un dispositif d'affichage à l'intérieur du véhicule autonome.

9. Support lisible par machine selon la revendication 8, dans lequel au moins l'un des profils de conduite inclut des informations indiquant si un utilisateur préfère dépasser ou céder la priorité à un objet dans le cadre d'un scénario de conduite similaire ; ou
dans lequel au moins l'un des profils de conduite inclut des informations indiquant une vitesse moyenne de changement de voie préférée par l'utilisateur, dans lequel les profils de conduite sont générés en fonction de la vitesse moyenne de changement de voie préférée par l'utilisateur dans le cadre d'un scénario de conduite de changement de voie similaire ; ou
dans lequel au moins l'un des profils de conduite inclut des informations indiquant un ou plusieurs itinéraires préférés qui ont été le plus fréquemment sélectionnés par l'utilisateur au cours d'une conduite antérieure, dans lequel les profils de conduite sont générés en fonction des itinéraires préférés dans le cadre de la sélection d'un itinéraire pour le véhicule ADV.

10. Support lisible par machine selon la revendication 8, dans lequel les opérations comprennent en outre les étapes ci-dessous consistant à :
en réponse à une détermination selon laquelle le véhicule ADV est conduit en mode de conduite autonome, identifier un premier scénario de conduite sur la base d'une perception entourant le véhicule ADV ;
accéder à un ou plusieurs des profils de conduite en vue de déterminer une ou plusieurs préférences d'utilisateur associées au premier scénario de conduite ; et
générer un profil de conduite sur la base de ladite une ou desdites plusieurs préférences d'utilisateur pour conduire le véhicule ADV dans le cadre du premier scénario de conduite ;
dans lequel de préférence, l'étape d'accès à un ou plusieurs des profils de conduite en vue de déterminer une ou plusieurs préférences d'utilisateur associées au premier scénario de conduite comprend les étapes ci-dessous consistant à :
identifier un point d'intérêt associé au premier scénario de conduite ;
déterminer que le point d'intérêt est associé à un emplacement où l'utilisateur s'est fréquemment arrêté au cours d'une conduite antérieure ; et
recommander le point d'intérêt à l'utilisateur, dans lequel les profils de conduite sont générés sur la base d'une réponse d'utilisateur à la recommandation.

11. Support lisible par machine selon la revendication 8, dans lequel les opérations comprennent en outre les étapes ci-dessous consistant à :
solliciter l'utilisateur du véhicule ADV avec une ou plusieurs questions en vue d'obtenir de l'utilisateur des informations spécifiques à l'utilisateur ; et
déterminer ledit un ou lesdits plusieurs comportements de conduite et ladite une ou lesdites plusieurs préférences de l'utilisateur, sur la base des informations spécifiques à l'utilisateur.

12. Système de traitement de données, comprenant :
un processeur ; et
une mémoire, couplée au processeur, pour stocker des instructions, qui, lorsqu'elles sont exécutées par le processeur, amènent le processeur à mettre en œuvre des opérations pour exploiter un véhicule autonome, les opérations incluant les étapes ci-dessous consistant à :
collecter (501) des statistiques de conduite d'un véhicule à conduite autonome (ADV), les statistiques de conduite comprenant des instructions de conduite émises à différents instants, et des informations de sélection d'itinéraire d'une pluralité d'itinéraires tandis que le véhicule ADV est conduit en mode de conduite manuelle par un utilisateur ;
obtenir au moins un élément parmi l'humeur ou l'état de santé de l'utilisateur en temps réel ;
déterminer (502) un ou plusieurs comportements de conduite d'utilisateur et une ou plusieurs préférences de l'utilisateur sur la base des statistiques de conduite pour un ou plusieurs scénarios de conduite prédéterminés, et dudit au moins un élément parmi l'humeur ou l'état de santé de l'utilisateur obtenu en temps réel, générer (503) un ou plusieurs profils de conduite pour l'utilisateur sur la base des comportements d'utilisateur et des préférences d'utilisateur dans le cadre des scénarios de conduite, dans lequel les profils de conduite générés sont utilisés en vue de planifier et commander le véhicule ADV dans le cadre de scénarios de conduite similaires lorsque l'utilisateur se déplace dans le véhicule autonome qui fonctionne en mode de conduite autonome ;
les opérations étant **caractérisées en ce qu'**elles comprennent en outre les étapes ci-dessous consistant à :
déterminer, sur la base d'au moins l'une parmi des informations de localisation et d'itinéraire, des informations de carte et de point d'intérêt, ou des informations de trafic en temps réel, des types de contenu appropriés pour les scénarios de conduite ;
mettre en œuvre, sur la base des types de contenu appropriés pour les scénarios de conduite, une opération de recherche dans un index de contenu, en vue d'identifier des candidats d'éléments de contenu ;
classer les candidats d'éléments de contenu identifiés sur la base des profils de conduite générés ;
sélectionner, parmi les candidats d'éléments de contenu identifiés, un élément de contenu présentant un score de classement supérieur à un seuil prédéterminé ; et
afficher l'élément de contenu sélectionné sur un dispositif d'affichage à l'intérieur du véhicule autonome.

13. Système selon la revendication 12, dans lequel au moins l'un des profils de conduite inclut des informations indiquant si un utilisateur préfère dépasser ou céder la priorité à un objet dans le cadre d'un scénario de conduite similaire ; ou
dans lequel au moins l'un des profils de conduite inclut des informations indiquant une vitesse moyenne de changement de voie préférée par l'utilisateur, dans lequel les profils de conduite sont générés en fonction de la vitesse moyenne de changement de voie préférée par l'utilisateur dans le cadre d'un scénario de conduite de changement de voie similaire ; ou
dans lequel au moins l'un des profils de conduite inclut des informations indiquant un ou plusieurs itinéraires préférés qui ont été le plus fréquemment sélectionnés par l'utilisateur au cours d'une conduite antérieure, dans lequel les profils de conduite sont générés en fonction des itinéraires préférés dans le cadre de la sélection d'un itinéraire pour le véhicule ADV.

14. Système selon la revendication 12, dans lequel les opérations comprennent en outre les étapes ci-dessous consistant à :
en réponse à une détermination selon laquelle le véhicule ADV est conduit en mode de conduite autonome, identifier un premier scénario de conduite sur la base d'une perception entourant le véhicule ADV ;
accéder à un ou plusieurs des profils de conduite en vue de déterminer une ou plusieurs préférences d'utilisateur associées au premier scénario de conduite ; et
générer un profil de conduite sur la base de ladite une ou desdites plusieurs préférences d'utilisateur pour conduire le véhicule ADV dans le cadre du premier scénario de conduite ;
dans lequel de préférence, l'étape d'accès à un ou plusieurs des profils de conduite en vue de déterminer une ou plusieurs préférences d'utilisateur associées au premier scénario de conduite comprend les étapes ci-dessous consistant à :
identifier un point d'intérêt associé au premier scénario de conduite ;
déterminer que le point d'intérêt est associé à un emplacement où l'utilisateur s'est fréquemment arrêté au cours d'une conduite antérieure ; et
recommander le point d'intérêt à l'utilisateur, dans lequel les profils de conduite sont générés sur la base d'une réponse d'utilisateur à la recommandation.

15. Système selon la revendication 12, dans lequel les opérations comprennent en outre les étapes ci-dessous consistant à :
solliciter l'utilisateur du véhicule ADV avec une ou plusieurs questions en vue d'obtenir de l'utilisateur des informations spécifiques à l'utilisateur ; et
déterminer ledit un ou lesdits plusieurs comportements de conduite et ladite une ou lesdites plusieurs préférences de l'utilisateur, sur la base des informations spécifiques à l'utilisateur.
